Europäisches Patentamt

(19) European Patent Office

Office européen des brevets

(11) Numéro de publication: **0 301 959**
**B1**

(12) **FASCICULE DE BREVET EUROPEEN**

(45) Date de publication du fascicule du brevet: **16.01.91**

(51) Int. Cl.⁵: **F 01 P 7/16, F 02 M 31/16**

(21) Numéro de dépôt: **88401945.6**

(22) Date de dépôt: **27.07.88**

(54) Boîtier de sortie de liquide de refroidissement pour moteur Diesel.

(30) Priorité: **31.07.87 FR 8711164**

(43) Date de publication de la demande:
**01.02.89 Bulletin 89/05**

(45) Mention de la délivrance du brevet:
**16.01.91 Bulletin 91/03**

(84) Etats contractants désignés:
**DE ES GB IT**

(56) Documents cités:
**EP-A-0 094 885**
**DE-A-2 923 994**
**FR-A-1 409 697**
**US-A-1 791 572**
**US-A-2 458 826**
**US-A-4 370 950**
**US-A-4 395 995**

(73) Titulaire: **AUTOMOBILES PEUGEOT**
**75, avenue de la Grande Armée**
**F-75116 Paris (FR)**

(73) Titulaire: **AUTOMOBILES CITROEN**
**62 Boulevard Victor-Hugo**
**F-92200 Neuilly-sur-Seine (FR)**

(72) Inventeur: **Rupp, Emmanuel**
**38, rue Alfred Nomblot**
**F-92340 Bourg-la-Reine (FR)**

(74) Mandataire: **Boivin, Claude**
**9, rue Edouard-Charton**
**F-78000 Versailles (FR)**

Courier Press, Leamington Spa, England.

# Description

La présente invention concerne un boîtier de sortie de liquide de refroidissement d'un moteur Diesel de véhicule automobile.

Jusqu'à présent le réchauffer du carburant, le filtre du carburant, les moyens de régulation de la température du liquide de refroidissement et de la température du carburant et la commande de la vitesse du ralenti moteur étaient dispersés sous le capot moteur et chacun des appareils nécessitait une fixation individuelle et des liaisons multiples (filtres électriques et conduites de fluide).

Cette disposition présentait de nombreux inconvénients: dispersion de fils électriques sous capot, multiplication des conduites électriques, multiplication des conduits de carburant et des conduits d'eau, nécessité de nombreux colliers avec risques de fuites, montage compliqué incompatible avec la robotisation et nécessitant une mise en oeuvre délicate et de faible fiabilité.

Le boîtier de sortie selon l'invention remédie à ces inconvénients.

Ce boîtier qui est destiné à être fixé directement sur la culasse d'un moteur Diesel, est caractérisé en ce qu'il regroupe dans un carter unique l'ensemble des fonctions de régulation thermique nécessaires au fonctionnement du moteur, notamment les moyens de réchauffage du carburant et les moyens de régulation de la température de ce carburant et du liquide de refroidissement, et en ce que le filtre de carburant est monté sur lui. Le boîtier selon l'invention peut facilement être réalisé par coulée à cire perdue.

On a décrit ci-après, à titre d'exemple non limitatif, un mode de réalisation du boîtier selon l'invention, avec référence aux dessins annexés dans lesquels:

La Figure 1 montre le montage du boîtier;
La Figure 2 en est une coupe schématique;
La Figure 3 en est une vue en perspective;
La Figure 4 en est une vue en perspective avec coupe partielle;
La Figure 5 en est une autre vue en perspective avec coupe partielle;
La Figure 6 montre en coupe partielle la capsule thermostatique commandant le ralenti accéléré.

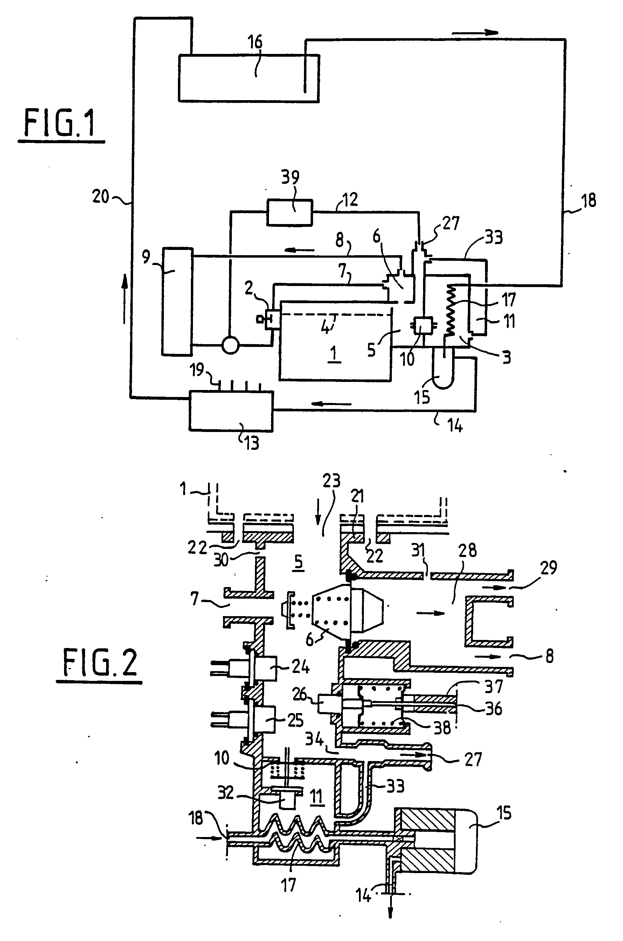

A la Figure 1 on voit la culasse 1 d'un moteur à combustion interne; sur cette culasse sont fixés une pompe à eau 2 et un boîtier de sortie d'eau 3. Le refoulement de la pompe à eau 2 est relié à l'entrée du circuit de refroidissement 4 du moteur, dont la sortie débouche dans une chambre 5 du boîtier 3. Cette chambre peut être mise en communication par l'intermédiare d'une vanne thermostatée à trois voies 6 montée entièrement dans le boîtier 3, soit directement avec l'admission de la pompe 2 par une canalisation 7 soit par une canalisation 8 avec l'entrée d'un radiateur 9 dont la sortie est reliée à l'admission de cette pompe. Une vanne thermostatée 10 est interposée entre la chambre 5 et une deuxième chambre 11 qui est reliée par une canalisation 33 à la canalisation 12 alimentant l'échangeur de chauffage 39, la canalisation 33 étant intégrée au boîtier.

Le moteur est alimenté en combustible par une pompe à injection 13 dont l'admission est reliée par une canalisation 14 à un filtre 15; celui-ci est porté par le boîtier 3 et lui-même relié à un réservoir 16 par un réchauffeur 17 logé dans la chambre 11 et par une canalisation 18, la liaison du filtre au réchauffeur 17 étant intégrée au boîtier. La pompe d'injection 13 est reliée par des canalisations 19 aux injecteurs du moteur et par une conduite de retour 20 au réservoir 16.

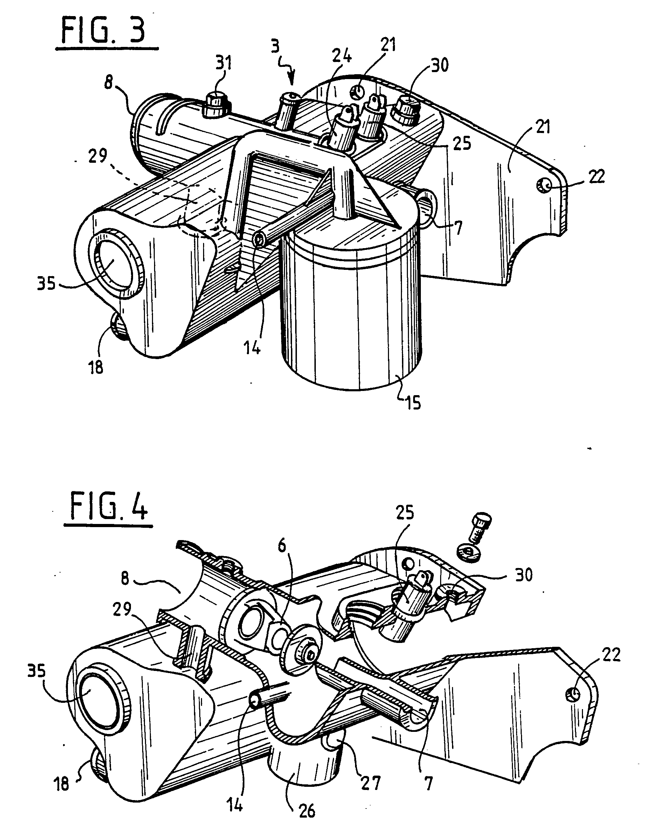

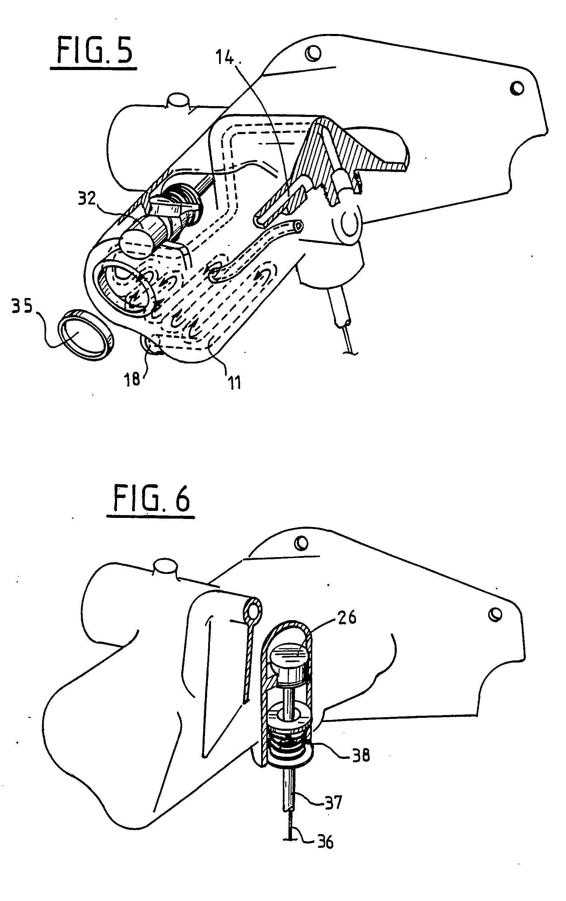

Dans le mode de réalisation pratique dont on voit le schéma à la Figure 2 et qui est représenté aux Figures 3 à 6, le boîtier de sortie 3 comporte une semelle 21 et des perçages 22 permettant sa fixation sur la culasse 1 du moteur. La chambre 5 communique par un orifice 23 avec le circuit de refroidissement 4 du moteur et contient, outre la vanne à trois voies 6, un thermostat 24, une thermistance 25 et une capsule 26 de commande du ralenti accéléré. L'orifice 23 est défini de façon à permettre la mise en place de la vanne thermostatée 6.

La chambre 5 communique par une canalisation 27 avec un échangeur 39 pour la climatisation du véhicule, dont le retour se fait vers la pompe à eau 2. La vanne à trois voies 6 permet de mettre la chambre 5 en communication soit avec la canalisation de retour 7, soit avec une chamre 28 qui est reliée non seulement avec la radiateur 9 par la canalisation 8, mais également avec un échangeur par une canalisation 29; cet échangeur peut être prévu pour assurer par exemple le refroidissement ou le réchauffage de l'huile du moteur, celui de l'huile de la boîte de vitesses ou celui du liquide d'une installation hydraulique. Les deux chambres 5 et 28 sont munies d'orifices de dégazage respectivement 30 et 31 normalement fermées par des vis. La chambre 11 dans laquelle se trouve le réchauffeur de combustible 17 contient également le thermostat 32 pour la commande de la vanne 10. Elle communique avec la canalisation 27 par une canalisation 33 et une perte de charge 34, dont le but est d'assurer un débit suffisant dans la chambre 11 lorsque le thermostat 10 est ouvert.

Comme indiqué précédemment, le carburant pénètre dans le réchauffer 17 par la canalisation 18, passe dans le filtre 15 et parvient ensuite à la pompe d'injection par la canalisation 14.

Le boîtier 3 présente un orifice nécessaire à son moulage et qui est fermé par un bouchon 35.

La capsule 26 commandant le ralenti accéléré actionne un câble 36 disposé dans une gaine 37, soumis à l'action d'un ressort de rappel 38 et commandant la pompe d'injection 13.

Lorsque le moteur est froid, l'eau provenant de la culasse 1, pénètre dans le boîtier 5 par l'ouverture 23; une partie de cette eau est ramenée à la pompe 2 par la canalisation 7 et la partie restante arrose la capsule 26 commandant le ralenti accéléré et s'en va par la canalisation 27 vers l'échangeur de climatisation du véhicule. Le thermostat 32 assure l'ouverture de la vanne 10 de sorte qu'une fraction de l'eau de refroidissement de la culasse passe dans la chambre 11 qu'elle quitte par la canalisation 33 pour rejoindre l'échangeur de climatisation par la canalisation 27.

Lorsque l'eau monte en température, elle réchauffe le carburant qui passe dans le réchauffeur 17. La vanne thermostatée 6 modifie le circuit de l'eau de refroidissement qui est alors envoyée vers le radiateur 9 par la canalisation 8 et vers l'échangeur par la canalisation 29. La capsule thermostatique 26 actionne le câble 36 qui remet pa pompe d'injection 13 à la vitesse de ralenti moteur chaud.

Lorsque la température de l'eau a atteint une valeur déterminée, le thermostat 32 assure la fermeture de la vanne 10, ce qui limite la montée en température du carburant; la température de ce dernier se trouve ainsi régulée dans une plage acceptable, par exemple entre 10 et 40 C pour une température extérieure inférieure à 0°C et une valeur maximale de 60C quand la température ambiante extérieure atteint 45 C.

Il va de soi que la présente invention no doit pas être considérée comme limitée au mode de réalisation décrit et représenté, mais en couvre, au contraire, toutes les variantes.

**Revendications**

1. Boîtier de sortie de liquide de refroidissement d'un moteur Diesel de véhicule automobile, destiné à être fixé directement sur la culasse du moteur, caractérisé en ce qu'il regroupe dans un carter unique (3) l'ensemble des fonctions de régulation thermique nécessaires au fonctionnement du moteur, notamment les moyens de réchauffage (17) du carburant et les moyens de régulation de la température de ce carburant et du liquide de refroidissement, et en ce que le filtre de carburant (15) est monté sur lui.

2. Boîtier selon la revendication 1, caractérisé en ce que son orifice (23), par lequel il communique avec le circuit de refroidissement (4) du moteur, peut être mis en communication par une vanne à trois voies (6) thermostatée montée dans le boîtier soit directement avec l'admission d'une pompe (2) pour le liquide de refroidissement, soit avec l'entrée d'un radiateur (9) dont la sortie est reliée à cette admission.

3. Boîtier selon la revendication 1 ou 2, caractérisé en ce que son orifice (23) par lequel il communique avec le circuit de refroidissement (4) du moteur peut être mis en communication par l'intermédiaire d'une vanne thermostatée (10) avec une chambre (11) du boîtier contenant un réchauffeur de combustible (17).

4. Boîtier selon l'une quelconque des revendications 1 à 3, caractérisé en ce qu'il enferme une capsule de commande (26) du ralenti accéléré.

5. Boîtier selon les revendications 2, 3 et 4, caractérisé en ce que l'orifice (23) par lequel il communique avec le circuit de refroidissement du moteur débouche dans une chambre (5) dans laquelle se trouvent la vanne à trois voies (6) et la capsule (26) et qui communique par l'intermédiaire de la vanne (10) avec la chambre (11) contenant le réchauffeur de combustible (17).

**Patentansprüche**

1. Kühlflüssigkeitsauslaßgehäuse für eine Dieselmaschine eines Kraftfahrzeuges, bestimmt zur direkten Befestigung am Zylinderkopf der Maschine, dadurch gekennzeichnet, daß es in einem einzigen Gehäuse (3) die Gesamtheit der Funktionen zur thermischen Steuerung zusammenfaßt, die zum Betrieb der Maschine erforderlich sind, insbesondere die Einrichtung (17) zum Vorwärmen des Kraftstoffes und die Einrichtung zur Regelung der Temperatur dieses Kraftstoffes und der Kühlflüssigkeit, und daß das Kraftstoffilter (15) an ihm angebaut ist.

2. Gehäuse nach Anspruch 1, dadurch gekennzeichnet, daß seine Mündung (23), durch die es mit dem Kühlstoffkreislauf (4) der Maschine in Verbindung steht, über ein thermostatisches Dreiwegeventil (6), das im Gehäuse eingebaut ist, entweder direkt mit dem Zulauf für eine Pumpe (2) für die Kühlflüssigkeit oder mit dem Einlaß eines Radiators (9) in Verbindung gebracht werden kann, dessen Auslaß mit diesem Zulauf verbunden ist.

3. Gehäuse nach Anspruch 1 oder 2, dadurch gekennzeichnet, daß seine Mündung (23), durch die es mit dem Kühlstoffkreislauf (4) der Maschine in Verbindung steht, unter Zwischenschaltung eines Thermostatventils (10) mit einer einen Vorwärmer (17) für den Kraftstoff enthaltenden Kammer (11) des Gehäuses in Verbindung gebracht werden kann.

4. Gehäuse nach einem der vorhergehenden Ansprüche 1 bis 3, dadurch gekennzeichnet, daß es eine Kapsel (26) zur Steuerung der erhöhten Leerlaufdrehzahl enthält.

5. Gehäuse nach den Ansprüchen 2, 3 und 4, dadurch gekennzeichnet, daß die Mündung (23), durch die es mit dem Kühlstoffkreislauf der Maschine in Verbindung steht, in eine Kammer (5) einmündet, in der sich das Dreiwegeventil (6) und die Kapsel (26) befinden und die durch die Zwischenschaltung des Ventils (10) mit der Kammer (11) in Verbindung steht, die den Vorwärmer (17) für den Kraftstoff enthält.

**Claims**

1. Cooling liquid outlet casing for a diesel engine of a motor vehicle, intended to be fixed directly on the cylinder head of the engine, characterized in that it groups together in a single case (3) the whole of the heat regulation functions required for operation of the engine, particularly the means (17) for heating the fuel and the means for regulating the temperature of this fuel and of the cooling liquid and in that the fuel filter (15) is mounted thereon.

2. Casing according to Claim 1, characterized in that its orifice (23) through which it communicates with the cooling circuit (4) of the engine, may be placed in communication, by a thermostat controlled three-way valve (6) mounted in the casing, either directly with the intake of a pump (2) for the cooling liquid or with the inlet of a radiator (9) whose outlet is connected to this intake.

3. Casing according to Claim 1 or 2, characterized in that its orifice (23) through which it communicates with the cooling circuit (4) of the engine may be placed in communication via a thermostat controlled valve (10) with a chamber (11) of the casing containing a fuel heater (17).

4. Casing according to any one of Claims 1 to 3, characterized in that it contains a capsule (26) for controlling the accelerated idling.

5. Casing according to Claims 2, 3 and 4, characterized in that the orifice (23) through which it communicates with the cooling circuit of the engine opens into a chamber (5) in which are situated the three-way valve (6) and the capsule (26) and which communicates via the valve (10) with the chamber (11) containing the fuel heater (17).

## FIG.1

## FIG.2

FIG. 3

FIG. 4

FIG.5

FIG.6